(19) Europäisches Patentamt
European Patent Office
Office européen des brevets

(11) EP 3 639 067 B1

(12) EUROPEAN PATENT SPECIFICATION

(45) Date of publication and mention
of the grant of the patent:
15.01.2025 Bulletin 2025/03

(51) International Patent Classification (IPC):
G02B 3/00 $^{(2006.01)}$   G01B 9/00 $^{(2006.01)}$
G01S 7/02 $^{(2006.01)}$   G01S 7/03 $^{(2006.01)}$
G02B 6/122 $^{(2006.01)}$   G02B 6/42 $^{(2006.01)}$
H01Q 15/10 $^{(2006.01)}$   H01Q 15/08 $^{(2006.01)}$
G02B 1/00 $^{(2006.01)}$

(21) Application number: 18818203.4

(22) Date of filing: 15.06.2018

(52) Cooperative Patent Classification (CPC):
H01Q 15/10; H01Q 15/08

(86) International application number:
PCT/US2018/037885

(87) International publication number:
WO 2018/232325 (20.12.2018 Gazette 2018/51)

(54) **NOVEL HOLLOW LIGHT WEIGHT LENS STRUCTURE**

NEUARTIGE HOHLE LEICHTE LINSENSTRUKTUR

NOUVELLE STRUCTURE DE LENTILLE LÉGÈRE CREUSE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 16.06.2017 US 201762521098 P

(43) Date of publication of application:
22.04.2020 Bulletin 2020/17

(73) Proprietor: Arizona Board of Regents on behalf of
the
University of Arizona
Tucson, AZ 85721 (US)

(72) Inventors:
• XIN, Hao
Tucson, AZ 85721 (US)
• LIANG, Min
Tucson, AZ 85721 (US)

(74) Representative: Dehns
10 Old Bailey
London EC4M 7NG (GB)

(56) References cited:
JP-B2- 5 553 886    US-A- 3 254 345
US-A- 3 430 248    US-A- 3 886 558
US-A- 5 421 848    US-A1- 2005 225 492
US-A1- 2011 069 377    US-A1- 2013 135 578
US-A1- 2016 027 846    US-A1- 2016 056 757

• MIN LIANG ET AL: "An X-band Luneburg Lens
antenna fabricated by rapid prototyping
technology", MICROWAVE SYMPOSIUM DIGEST
(MTT), 2011 IEEE MTT-S INTERNATIONAL, IEEE,
5 June 2011 (2011-06-05), pages 1 - 4,
XP032006685, ISBN: 978-1-61284-754-2, DOI:
10.1109/MWSYM.2011.5972738

## Description

## CROSS REFERENCE

This application claims priority to U.S. Provisional Patent Application No. 62/521,098, filed June 16, 2017.

## FIELD OF THE INVENTION

The present invention relates to the design and fabrication of a hollow 3D lens structures, more specifically, the design and fabrication of a hollow light weight Luneburg lens structure using partially-metalized thin film, string, threads, fiber or wire-based metamaterial.

## BACKGROUND OF THE INVENTION

The Luneburg lens is an attractive gradient index device for multiple beam tracking because of its high gain, broadband behavior, and ability to form multiple beams. Every point on the surface of a Luneburg lens is the focal point of a plane wave incidents from the opposite side. The permittivity distribution of a Luneburg Lens is given by: $\varepsilon_r = 2 - (\frac{r}{R})^2$, where $\varepsilon_r$ is the permittivity, $R$ is the radius of the lens and $r$ is the distance from the location to the center of the lens. In current technologies, a 3 dimensional ("3D") printed Luneburg lens structure is constructed by controlling the filling ratio between the polymer composing the lens and air. Most of the lens structure is typically made of polymer; therefore, its weight increases significantly when the size of the lens becomes larger. Further, fabrication costs associated with current technologies are typically high for larger lens size. The present invention features a hollow light weight, low-cost, and high performance 3D Luneburg lens structure using partially-metallized thin film, string, threads, fiber or wire-based metamaterial.

US patent US3254345A discloses artificial dielectrics composed of three sets of interspersed rods. Each rod may be all dielectric or all metal or may comprise a series of metal sections separated by gaps of dielectric material.

Any feature or combination of features described herein are included within the scope of the present invention provided that the features included in any such combination are not mutually inconsistent as will be apparent from the context, this specification, and the knowledge of one of ordinary skill in the art. Additional advantages and aspects of the present invention are apparent in the following detailed description and claims.

## SUMMARY OF THE INVENTION

The present invention features a method for fabricating a hollow light-weight 3D lens structure operable in the RF frequency range. In some embodiments, partially-metalized thin film or wire is used to implement the continuously varying relative permittivity profile characteristic of the lens structures. In alternate embodiments, wire base dielectrics are utilized to implement the relative permittivity profile.

One of the unique and inventive technical features of the present invention is the use of the effective medium approach to increase the amount of free-space comprising the volume of the present 3D Luneburg lens structure, relative to conventional 3D Luneburg lenses. Without wishing to limit the invention to any theory or mechanism, it is believed that the technical feature of the present invention advantageously provides for a hollow lighter weighing lens structure and, as less material is required, a higher fabrication rate. None of the presently known prior references or work has the unique inventive technical feature of the present invention.

## BRIEF DESCRIPTION OF THE DRAWINGS

The features and advantages of the present invention will become apparent from a consideration of the following detailed description presented in connection with the accompanying drawings in which:

FIG. 1A is an illustration of the principal of the hollow structure lens.

FIG. 1B is an illustration of metallization of imaginary cell and the degree of metallization according to its junction location.

FIG. 1C is a photo of a center cross-section of a hollow light-weight Luneburg lens structure.

FIG. 1D is a photo of the hollow light-weight Luneburg lens structure of the present invention.

FIG. 2A shows an illustration of the unit cell structure of the partially-metallized wire-based hollow light-weight Luneburg lens structure having a unit cell size of 5 mm.

FIG. 2B shows an illustration of the unit cell structure of the partially-metallized string-based hollow light-weight Luneburg lens structure having a unit cell size of 10 mm. The dielectric wire, having a copper coating, has a diameter of 0.5 mm and a dielectric constant of 2.8. Metal traces include all three axes (X, Y, and Z).

FIG. 2C shows an illustration of an alternate embodiment of the unit cell structure of the partially-metallized string-based hollow light-weight Luneburg lens structure having a unit cell size of 5 mm. The dielectric wire has a thickness of 0.14 mm and a permittivity 2.5. The metal traces have a conductivity of $1 \times 10^{-5}$ S/m to emulate the conductive ink before sintering. Metal traces including all three axes (X, Y, and Z).

FIG. 3A shows an example of a 25-layer partially-metallized string-based hollow light-weight Luneburg lens structure having a plurality of unit cell structures, each as detailed in FIG. 2A.

FIG. 3B shows an example of a 25-layer partially-metallized string-based hollow light-weight Luneburg lens structure having a plurality of unit cell structures, each as detailed in FIG. 2B.

FIG. 3C shows an example of a 25-layer partially-metallized string-based hollow light-weight Luneburg lens structure having a plurality of unit cell structures, each as detailed in FIG. 2C.

FIG. 4 shows an example of the metal length distribution for layer 0 of the unit cell of FIG. 2B.

FIG. 5A shows unit cell simulations and effective permittivity for the unit cell structure of FIG. 2A.

FIG. 5B shows unit cell simulations and effective permittivity for the unit cell structure of FIG. 2B.

FIG. 5C shows unit cell simulations and effective permittivity for the unit cell structure of FIG. 2C.

FIG. 6A shows a graph of the simulated relationship between metal length and effective permittivity as detailed in FIG. 5A.

FIG. 6B shows a graph of the simulated relationship between metal length and effective permittivity as detailed in FIG. 5B.

FIG. 6C shows a graph of the simulated relationship between metal length and effective permittivity as detailed in FIG. 5C.

FIG. 7 shows the measured the plane containing the magnetic field vector ("H-plane") radiation pattern of the light-weight Luneburg lens of FIG. 1B.

FIG. 8 shows the gain and H-plane half-power beamwidth ("HPBW") at different frequencies from 8 to 12 GHz of the light-weight Luneburg lens of FIG. 1B.

FIG. 9 shows the measured plane containing the electric field vector ("E-plane") radiation pattern of the light-weight Luneburg lens of FIG. 1B.

FIG. 10 shows the gain and E-plane HPBW at different frequencies from 8 to 12 GHz of the light-weight Luneburg lens of FIG. 1B.

FIG. 11 shows two additional approaches to constructing the partially-metallized plate-based hollow light-weight Luneburg lens structure.

## DETAILED DESCRIPTION OF THE INVENTION

The present invention features a hollow structure Luneburg lens (100) with radius R (102) comprising:

a) a three-dimensional scaffold (104) having multiple junctions (110); wherein each junction inside the lens is at least partially metalized (170), (180) to a degree;
b) a center point (120) of the hollow structure lens (100) formed by the three-dimensional scaffold (104); and
c) an outer edge (130) of the hollow structure lens (100) formed by the three-dimensional scaffold (104);

wherein the three-dimensional scaffold (104) forms the junctions (110) inside the lens;

wherein the junctions (110) are positioned from the innermost of the lens at or near the center point (120) toward the outermost of the lens at or near the edge (130) of the lens (100);

wherein each junction (110) resides in an imaginary unit cell (140); each imaginary unit cell is at least partially metalized to the degree of the at least partially metalized junction (170) that resides within each imaginary unit cell (140);

wherein the further the partially metalized junction (180) is away from the center point (120), the less the degree of the metallization of the imaginary cell (140).

In some embodiments, the degree of the metallization of the imaginary cell can be calculated by a full-wave finite-element simulation software, to produce a permittivity of the imaginary cell being $\varepsilon_r$, wherein

$$\varepsilon_r = 2 - (\frac{r}{R})^2$$

, wherein r is the distance of the junction to the center point (120).

In some embodiments, the at least partially metalized junction is constructed from a at least partially metalized thin film (180), thread, fiber, wire or string (190).

In some embodiments, a metal etch, or an ink jet print can be used to metalize a metamaterial substrates to make the partially metallized junctions (180), (190).

In some embodiments, the scaffold (104) is constructed by stacking layers of the at least partially metalized thin films, wires, threads, fiber or strings in a way that each layer crisscross to each other to produce the hollow structure lens (100).

In some embodiments, the crisscross layers is fixed on to a support frame (200).

In some embodiments, the support frame is 3D printed.

In some embodiments, the scaffold and partially metalized junctions is constructed by interlocking at least partially metalized thin film plates (210), (220); wherein interlocking means at least 2 plates intersect with each other and form the junction (110); wherein the at least partially metalized plates form at least partially metalized junctions when they interlock.

In some embodiments, most of the space is a free space due to 3D scaffold structure.

In all embodiments, the hollow structure lens (100) is a Luneburg lens.

In a broad embodiment, the present invention features a method for fabricating a hollow light-weight lens structure as the one in paragraph [0030], operating in Radio Frequency (RF), by utilizing effective medium approximations of partially-metalized metamaterial thin film, wire, threads, fiber or string, the method comprising

a) etching a series of patterns, descriptive of a continuously varying relative permittivity characteristic of the light-weight lens structure, on a series of layers of a dielectric substrate with conductive ink;

b) providing a support frame;

c) assembling the light-weight lens structure by stacking the series of layers of the dielectric substrate; and

d) securing said stacking with the set of support frames.

In all embodiments, the present invention features the lens is a Luneburg lens.

In a broad embodiment, the present invention features a hollow light-weight lens structure having all the features of the lens in paragraph [0030], operating in RF frequency, by utilizing effective medium approximations of partially-metalized dielectric thin film, wire, string, threads or fiber to realize a gradient index requirement of Luneburg lens structures, the method comprising constructing a set of design patterns, representative of a continuously varying relative permittivity characteristic of the light-weight Luneburg lens structure, with a plurality of partially-metallized strings, wherein each partially-metallized string comprises a metallic coating disposed on a metamaterial.

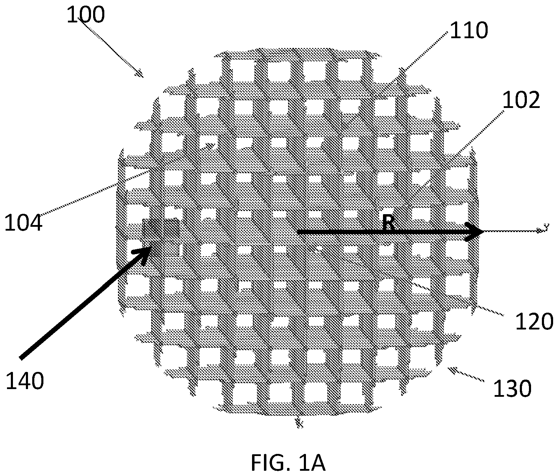

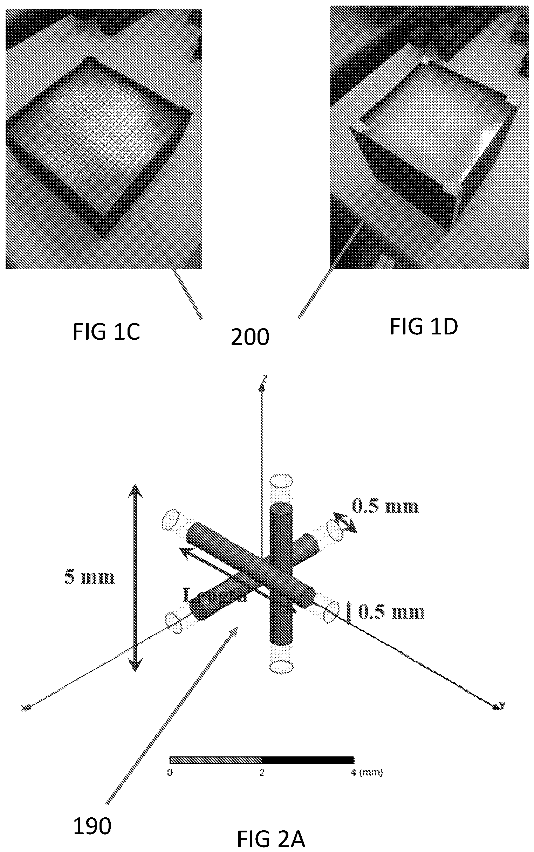

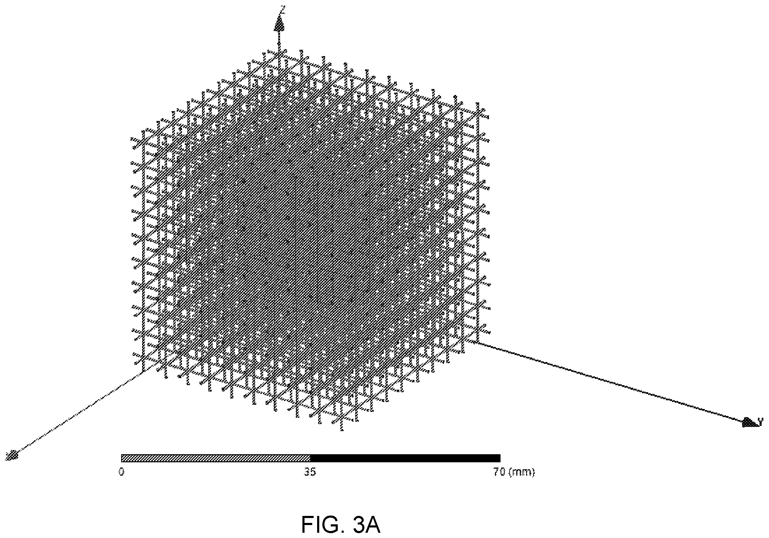

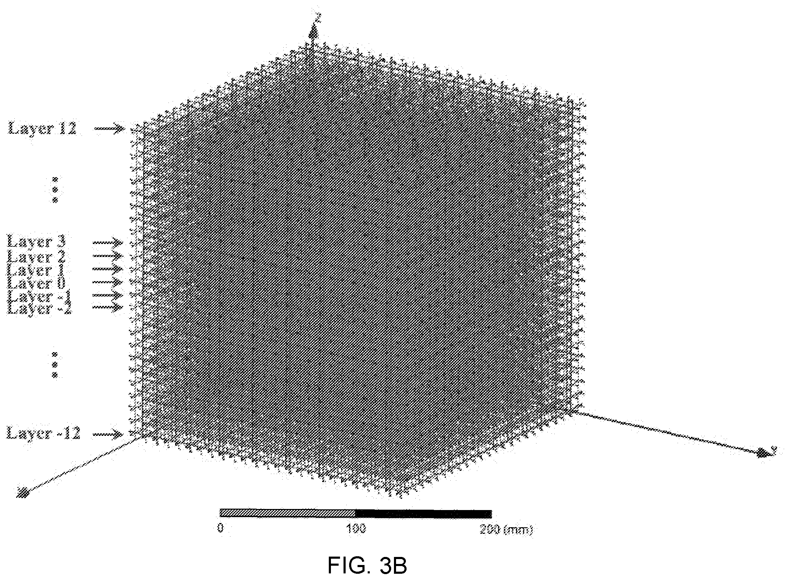

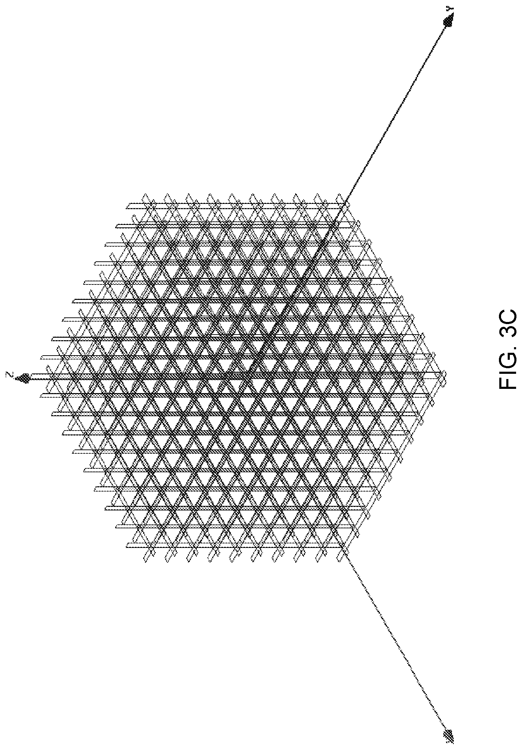

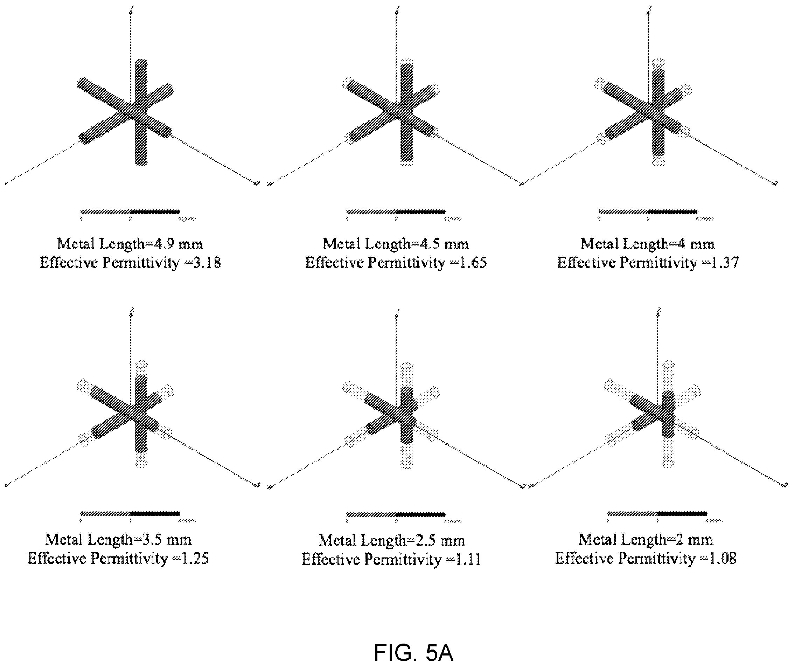

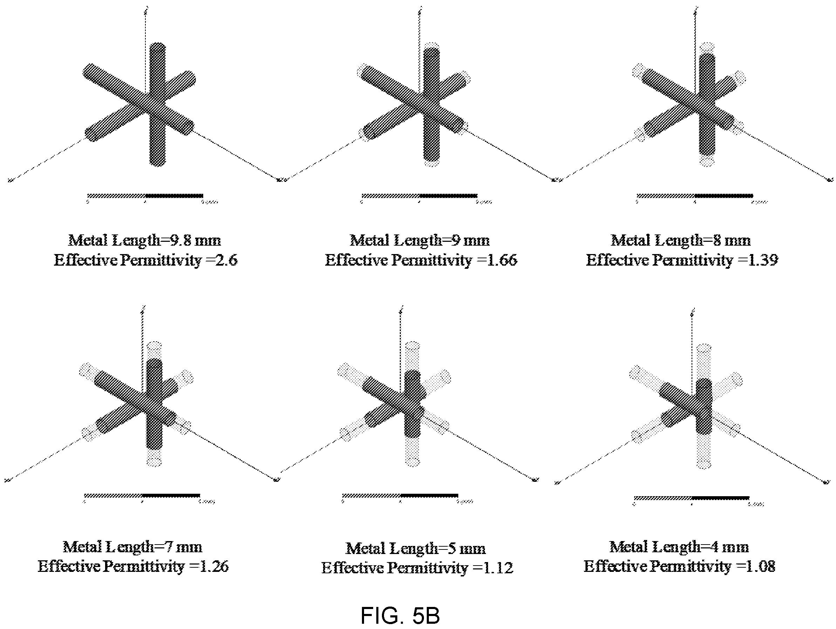

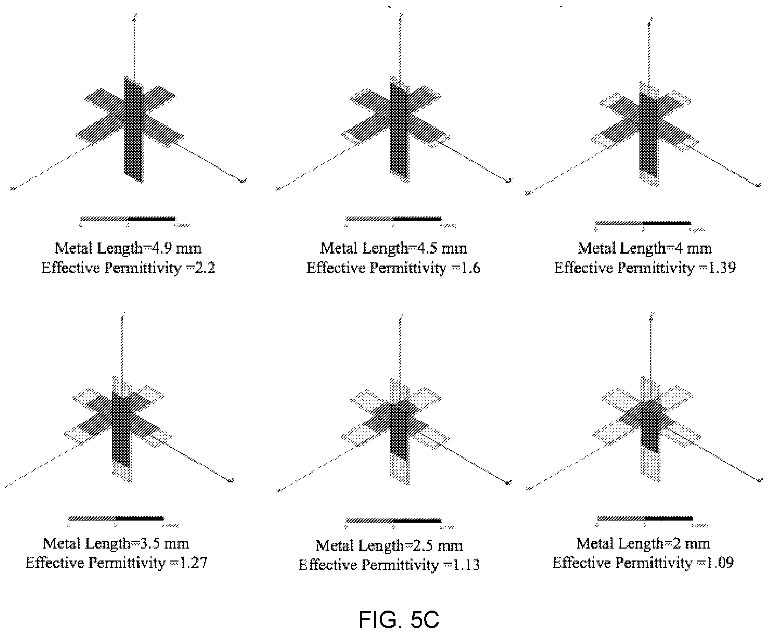

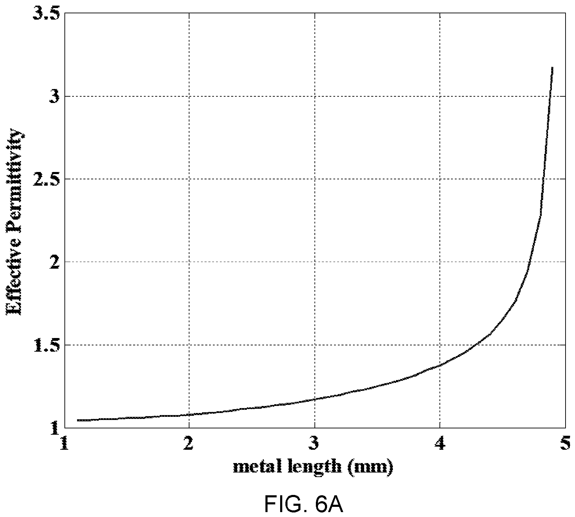

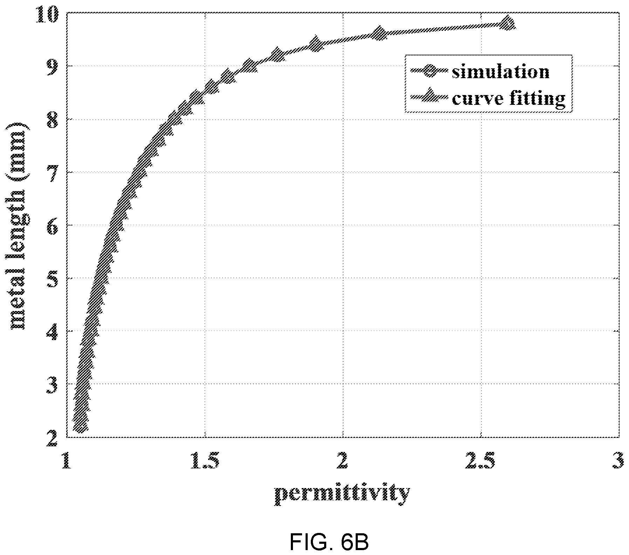

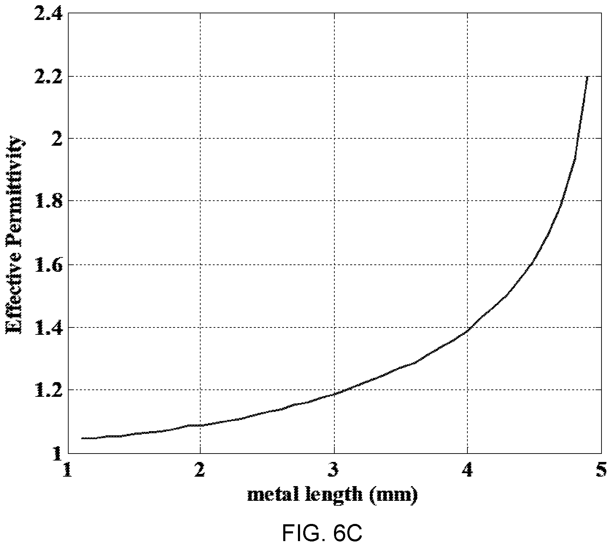

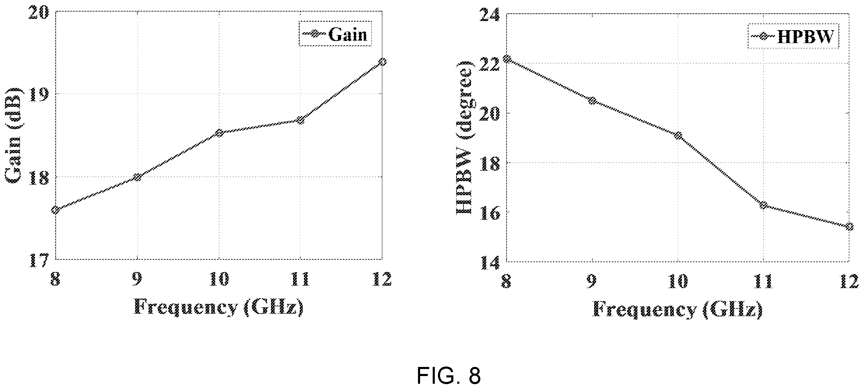

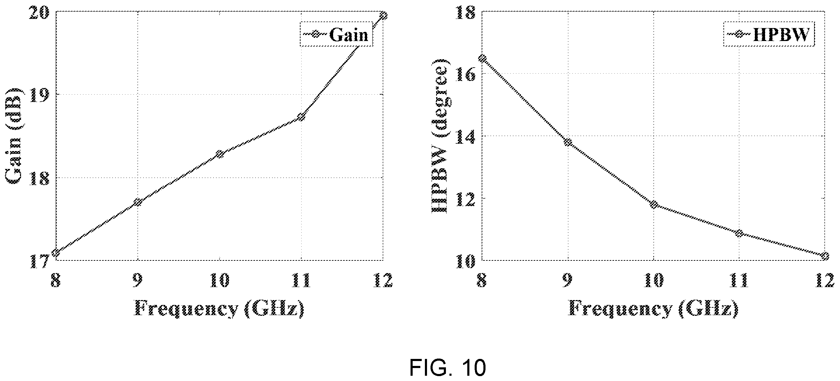

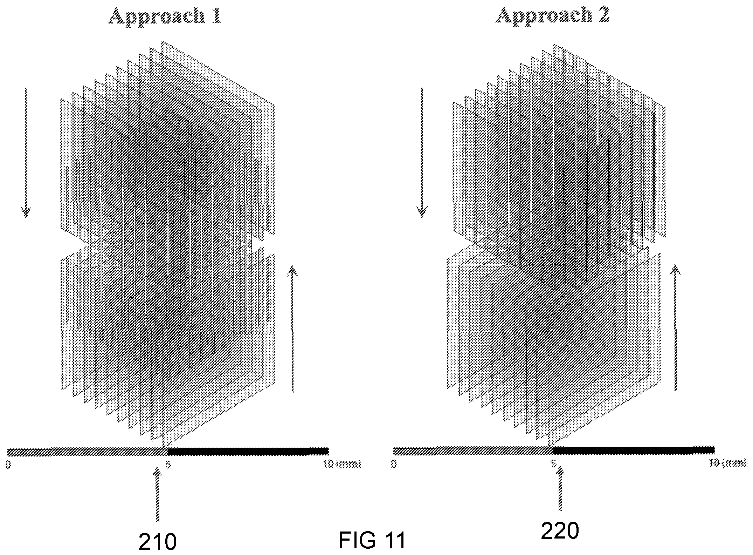

Referring now to FIGs. 1A-11, the present invention features a method for fabricating a hollow light-weight Luneburg lens structure operable in the RF frequency range. The light weight of the lens structure, (relative to conventional Luneburg lens structures), is accomplished by utilizing effective medium approximations of partially-metalized dielectric thin film, wire or string to increase an amount of free-space comprising the volume of the light-weight Luneburg lens structure. In some embodiments, the method comprises etching a series of patterns, descriptive of a continuously varying relative permittivity characteristic of the light-weight Luneburg lens structure, onto a series of layers of a dielectric substrate with conductive ink. In further embodiments, a set of support frames, composed of polymer, are printed via a 3-D printer. The light-weight Luneburg lens structure may be assembled by stacking the series of layers of the dielectric substrate, and securing said stacking with the set of support frames.

A conventional 3D printed Luneburg lens structure having the same dimensions of the present light-weight Luneburg lens structure has a weight of 500 g, while the weight of the light-weight Luneburg lens structure is less than 20 g (excluding the set of supporting frames). Moreover, the majority of the weight of the light-weight Luneburg lens structure is a result of the weight of the set of supporting frames, which is about 180 g. By replacing the frames with other lighter materials (e.g., foam), the weight of the light-weight Luneburg lens structure may be further decreased.

In an alternate embodiment, the continuously varying relative permittivity characteristic of the light-weight Luneburg lens structure is realized by employing a plurality of partially-metallized strings. Each partially-metallized string may comprise a metallic coating disposed on a dielectric substrate. Examples of methods for coating the dielectric substrate with the metallic portion include, but are not limited to: conductive ink printing, copper painting, and electronic platting.

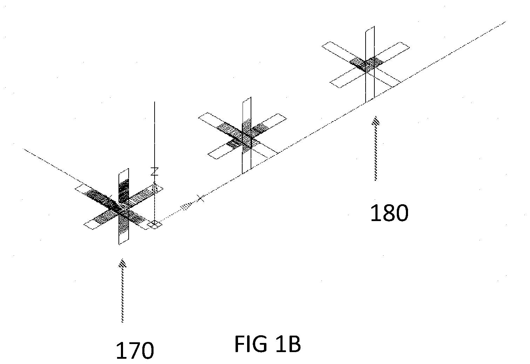

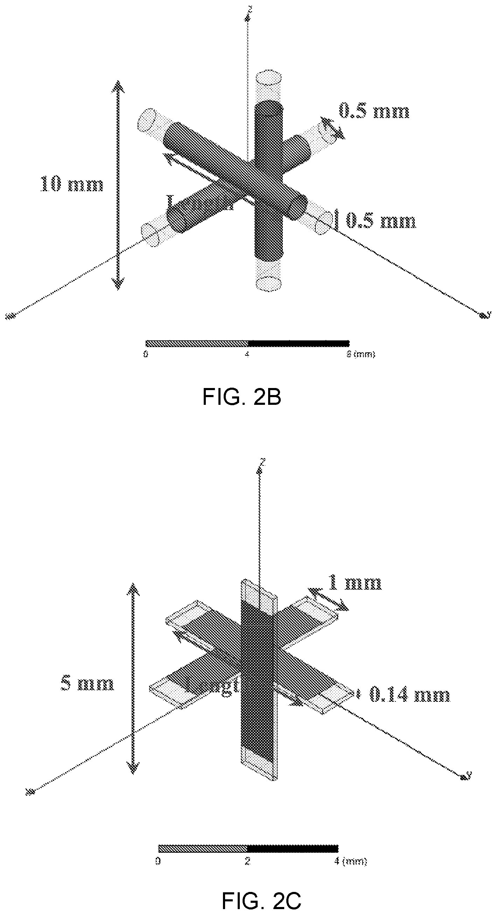

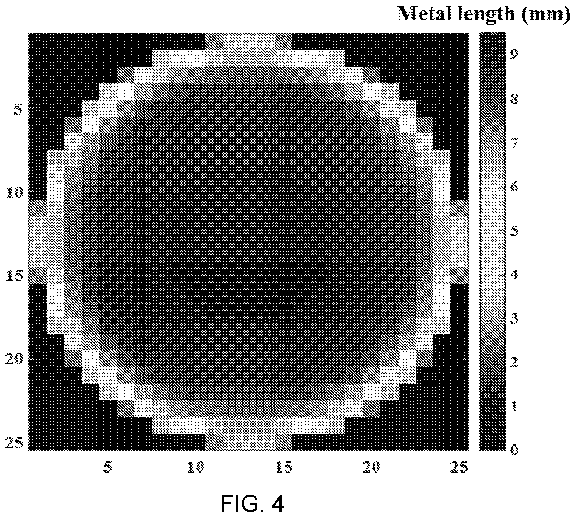

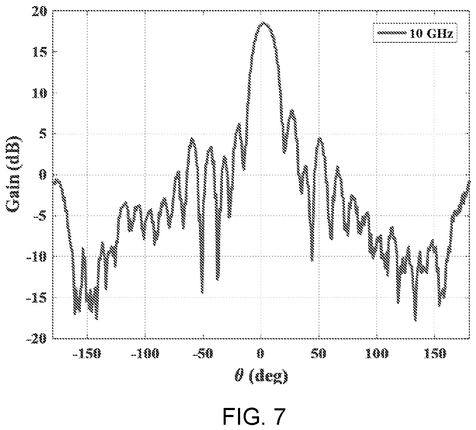

FIGs. 2A-2C show an example of a unit cell structure of various sizes for the partially-metallized string or thin film based hollow light-weight Luneburg lens structure. The effective permittivity of the unit cell was simulated by full-wave finite-element simulation software ANSYS HFSS. Darker portions represent the metallized coating and lighter portions reprsent the dielectric. FIG. 4 illustrates the metal length distribution for layer 0 of the unit cell of FIG. 2B. The lens is symmetric. Therefore, the distribution for layer 1 and layer -1 is the same, as is the distribution for layer 2 and layer -2, and so on. FIG. 7 shows the measured H-plane radiation of the light-weight Luneburg lens of FIG. 1B. The measured gain at 10 GHz is 18.5 dB. The measured gain at 10 GHz is 0.5 dB lower than the 3D printed Luneburg lens of FIG. 1D. The side lobe is 5 dB higher than the 3D printed Luneburg lens. The lower gain and higher side lobe may be due to the outside frame used to mount the lens.

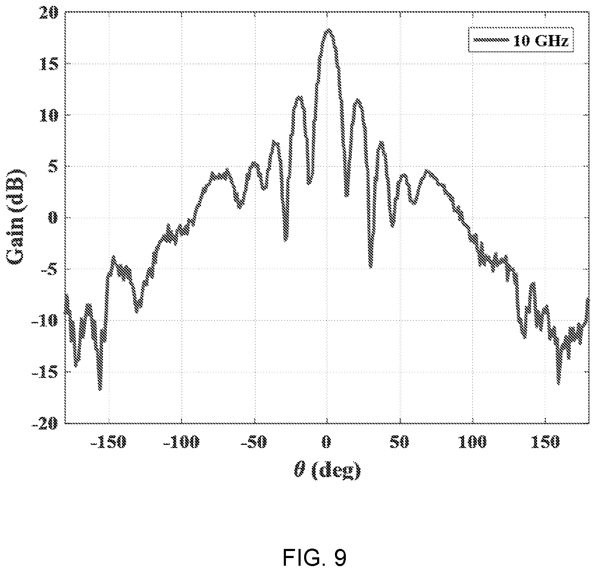

FIG. 9 shows the measured H-plane radiation of the light-weight Luneburg lens of FIG. 1B. The measured gain at 10 GHz is 18.3 dB. The side lobe in E-plane is even higher than the side lobe in H-plane, especially at 12 GHz. Removal of the frame may result in further improvement.

As used herein, the term "about" refers to plus or minus 10% of the referenced number.

Various modifications of the invention, in addition to those described herein, will be apparent to those skilled in the art from the foregoing description. Such modifications are also intended to fall within the scope of the present invention that is solely defined by the appended claims.

Although there has been shown and described the preferred embodiment of the present invention, it will be clear to those skilled in the art that modifications may be made thereto which do not exceed the scope of the appended claims. Therefore, the scope of the invention is only to be limited by the following claims. Reference numbers recited in the claims are exemplary and for ease of review by the patent office only and are not limiting in any way. In some embodiments, the figures presented in this patent application are drawn to scale, including the angles, ratios of dimensions, etc. In some embodiments, the figures are representative only and the claims are not limited by the dimensions of the figures. In some embodiments, descriptions of the inventions described herein using the phrase "comprising" includes embodiments that could be described as "consisting of", and as such the written description requirement for claiming one or more embodiments of the present invention using the phrase "consisting of" is met.

The reference numbers recited in the below claims are solely for ease of examination of this patent application, and are exemplary, and are not intended in any way to limit the scope of the claims to the particular features having the corresponding reference numbers in the drawings.

**Claims**

1. A hollow structure Luneburg lens (100) comprising:

   a three-dimensional scaffold (104) comprising multiple junctions (110); wherein each junction is at least partially metalized (170, 180);
   a center point (120) of the lens (100) is formed by the three-dimensional scaffold (104); and
   an outer edge (130) of the lens (100) is formed by the three-dimensional scaffold (104);
   wherein the junctions (110) are positioned from the innermost of the lens at or near the center point (120) toward the outermost of the lens at or near the edge (130) of the lens (100);
   wherein each junction (110) resides in an imaginary unit cell (140); each imaginary unit cell (140) is at least partially metalized to the degree of the at least partially metalized junction (170) that resides within each imaginary unit cell (140); and
   wherein the further the partially metalized junction (180) is away from the center point (120), the less the degree of the metallization of the imaginary cell (140).

2. The lens (100) of claim 1, wherein the degree of the metallization of the imaginary cell is such as to produce a permittivity of the imaginary cell being $\varepsilon_r$

   $$\varepsilon_r = 2 - (\frac{r}{R})^2$$

   wherein , wherein r is the distance of the junction to the center point (120), and R is the radius of the lens.

3. The lens (100) of claim 1 or claim 2, wherein the at least partially metalized junction is constructed from an at least partially metalized thin film (180), thread, fiber, wire or string (190).

4. The lens (100) of any one of claims 1 to 2, wherein the partially metallized junctions (170, 180) are dielectric substrates metallized with a metal etch or an ink jet print.

5. The lens (100) of any one of claims 1 to 2, wherein the scaffold (104) is constructed by stacking layers of the at least partially metalized thin films, wires or strings in a way that each layer crisscross to each other to produce the hollow structure lens (100).

6. The lens (100) of claim 5, wherein the crisscross layers is fixed on to a support frame (200).

7. The lens (100) of claim 6, wherein the support frame is 3D printed.

8. The lens (100) of any one of claims 1, 2, 6 or 7, wherein the scaffold (104) and partially metalized junctions are constructed by interlocking at least partially metalized thin film plates (210, 220); wherein interlocking means at least 2 plates intersect with each other and form the junction (110); wherein the at least partially metalized plates form at least partially metalized junctions when they interlock.

9. The lens (100) of any one of claims 1 to 8, wherein the weight of the Luneburg lens (100) is less than 20 g excluding the set of supporting frames.

10. The lens (100) of any one of claims 1 to 9, wherein majority of the lens space is a free space due to three dimensional scaffold structure.

11. A method for fabricating a light-weight Luneburg lens structure (100) of claim 1, operating in Radio Frequency, RF, by utilizing effective medium approximations of partially-metalized dielectric thin film (180), wire, threads, fiber or string (190), the method comprising:

    a) etching a series of patterns, descriptive of a continuously varying relative permittivity characteristic of the light-weight Luneburg lens structure, on a series of layers of a dielectric substrate with conductive ink;
    b) providing a support frame (200);
    c) assembling the light-weight Luneburg lens structure by stacking the series of layers of the dielectric substrate; and
    d) securing said stacking with the set of support frames (200).

12. The method of claim 11 wherein the weight of the Luneburg lens (100) is less than 20 g excluding the set of supporting frames.

13. A method for fabricating a light-weight Luneburg lens structure (100) of claim 1, operating in RF frequency, by utilizing effective medium approximations of partially-metalized dielectric thin film (180), wire, string (190), threads or fiber to realize a gradient index requirement of Luneburg lens structures, the method comprising:
    constructing a set of design patterns, representative of a continuously varying relative permittivity characteristic of the light-weight Luneburg lens structure, with a plurality of partially-metallized strings, wherein each partially-metallized string comprises a metallic coating disposed on a dielectric material.

**Patentansprüche**

1. Lüneburg-Linse (100) mit Hohlstruktur, umfassend:

   ein dreidimensionales Gerüst (104), das mehrere Verbindungsstellen (110) umfasst; wobei jede Verbindungsstelle (170, 180) zumindest teilweise metallisiert ist;
   einen Mittelpunkt (120) der Linse (100), der durch das dreidimensionale Gerüst (104) gebildet wird; und
   einen Außenrand (130) der Linse (100), der durch das dreidimensionale Gerüst (104) gebildet wird;
   wobei die Verbindungsstellen (110) vom innersten Teil der Linse an oder nahe dem Mittelpunkt (120) zum äußersten Teil der Linse an oder nahe dem Rand (130) der Linse (100) positioniert sind;
   wobei sich jede Verbindungsstelle (110) in einer imaginären Einheitszelle (140) befindet; jede imaginäre Einheitszelle (140) zumindest teilweise in dem Ausmaß der zumindest teilweise metallisierten Verbindungsstelle (170) metallisiert ist, die sich in jeder imaginären Einheitszelle (140) befindet; und
   wobei der Metallisierungsgrad der imaginären Zelle (140) umso geringer ist, je weiter die teilweise metallisierte Verbindungsstelle (180) vom Mittelpunkt (120) entfernt ist.

2. Linse (100) nach Anspruch 1, wobei der Metallisierungsgrad der imaginären Zelle derart ist, dass eine Permittivität der imaginären Zelle von $\varepsilon_r$ erzeugt

   $$\varepsilon_r = 2 - \left(\frac{r}{R}\right)^2$$

   wird, wobei , wobei r der Abstand der Verbindungsstelle zum Mittelpunkt (120) und R der Radius der Linse ist.

3. Linse (100) nach Anspruch 1 oder Anspruch 2, wobei die zumindest teilweise metallisierte Verbindungsstelle aus einem/einer zumindest teilweise metallisierten Dünnfilm (180), Faden, Faser, Draht oder Schnur (190) aufgebaut ist.

4. Linse (100) nach einem der Ansprüche 1 bis 2, wobei die teilweise metallisierten Verbindungsstellen (170, 180) dielektrische Substrate sind, die mit einer Metallätzung oder einem Tintenstrahldruck metallisiert wurden.

5. Linse (100) nach einem der Ansprüche 1 bis 2, wobei das Gerüst (104) durch Stapeln von Schichten der zumindest teilweise metallisierten Dünnfilme, Drähte oder Schnüre in einer Weise aufgebaut ist, dass sich die einzelnen Schichten kreuzen, um die Linse (100) mit Hohlstruktur zu erzeugen.

6. Linse (100) nach Anspruch 5, wobei die sich kreuzenden Schichten auf einem Trägerrahmen (200) befestigt sind.

7. Linse (100) nach Anspruch 6, wobei der Trägerrahmen 3D-gedruckt ist.

8. Linse (100) nach einem der Ansprüche 1, 2, 6 oder 7, wobei das Gerüst (104) und die teilweise metallisierten Verbindungsstellen durch Ineinandergreifen von zumindest teilweise metallisierten Dünnfilmplatten (210, 220) aufgebaut sind; wobei Ineinandergreifen bedeutet, dass sich zumindest zwei Platten kreuzen und die Verbindungsstelle (110) bilden; wobei die zumindest teilweise metallisierten Platten zumindest teilweise metallisierte Verbindungsstellen bilden, wenn sie ineinandergreifen.

9. Linse (100) nach einem der Ansprüche 1 bis 8, wobei das Gewicht der Lüneburg-Linse (100) ohne den Satz von Trägerrahmen weniger als 20 g beträgt.

10. Linse (100) nach einem der Ansprüche 1 bis 9, wobei der Großteil des Linsenraums aufgrund der dreidimensionalen Gerüststruktur ein freier Raum ist.

11. Verfahren zum Herstellen einer leichten Lüneburg-Linsenstruktur (100) nach Anspruch 1, die im Hochfrequenzbereich (HF) arbeitet, durch Benutzen effektiver mittlerer Näherungen aus teilweise metallisierten dielektrischen Dünnfilmen (180), Drähten, Fäden, Fasern oder Schnüren (190), wobei das Verfahren Folgendes umfasst:

    a) Ätzen einer Reihe von Mustern, die eine kontinuierlich variierende relative Permittivitätscharakteristik der leichten Lüneburg-Linsenstruktur beschreiben, auf eine Reihe von Schichten eines dielektrischen Substrats mit leitfähiger Tinte;
    b) Bereitstellen eines Trägerrahmens (200);
    c) Zusammenbauen der leichten Lüneburg-Linsenstruktur durch Stapeln der Schichten des dielektrischen Substrats; und
    d) Sichern des Stapels mit dem Satz von Trägerrahmen (200).

12. Verfahren nach Anspruch 11, wobei das Gewicht der Lüneburg-Linse (100) ohne den Satz von Trägerrahmen weniger als 20 g beträgt.

13. Verfahren zum Herstellen einer leichten Lüneburg-Linsenstruktur (100) nach Anspruch 1, die im HF-Frequenzbereich arbeitet, durch Benutzen effektiver mittlerer Näherungen aus teilweise metallisierten dielektrischen Dünnfilmen (180), Drähten, Schnüren (190), Fäden oder Fasern, um eine Gradientenindexanforderung von Lüneburg-Linsenstrukturen zu erfüllen, wobei das Verfahren Folgendes umfasst: Aufbauen eines Satzes von Designmustern, die eine kontinuierlich variierende relative Permittivitätseigenschaft der leichten Lüneburg-Linsenstruktur darstellen, mit einer Vielzahl von teilweise metallisierten Schnüren, wobei jede teilweise metallisierte Schnur eine metallische Beschichtung umfasst, die auf einem dielektrischen Material angeordnet ist.

**Revendications**

1. Lentille de Luneburg à structure creuse (100) comprenant :

   un échafaudage tridimensionnel (104) comprenant de multiples jonctions (110) ; dans laquelle chaque jonction est au moins partiellement métallisée (170, 180) ;
   un point central (120) de la lentille (100) est formé par l'échafaudage tridimensionnel (104) ; et
   un bord externe (130) de la lentille (100) est formé par l'échafaudage tridimensionnel (104) ;
   dans laquelle les jonctions (110) sont positionnées de la partie la plus interne de la lentille au niveau, ou à proximité, du point central (120) vers la partie la plus externe de la lentille au niveau, ou à proximité, du bord (130) de la lentille (100) ;
   dans laquelle chaque jonction (110) se situe dans une cellule unitaire imaginaire (140) ;
   chaque cellule unitaire imaginaire (140) est au moins partiellement métallisée au degré de la jonction au moins partiellement métallisée (170) qui se situe dans chaque cellule unitaire imaginaire (140) ; et
   dans laquelle plus la jonction partiellement métallisée (180) est éloignée du point central (120), moins le degré de la métallisation de la cellule imaginaire (140) est élevé.

2. Lentille (100) selon la revendication 1, dans laquelle le degré de la métallisation de la cellule imaginaire est tel qu'il produit une permittivité de la cellule imaginaire étant $\varepsilon_r$ dans laquelle

$$\varepsilon_r = 2 - \left(\frac{r}{R}\right)^2$$

, dans laquelle r est la distance de la jonction au point central (120) et R est le rayon de la lentille.

3. Lentille (100) selon la revendication 1 ou la revendication 2, dans laquelle la jonction au moins partiellement métallisée est construite à partir d'un film mince (180), d'un fil, d'une fibre, d'un fil métallique ou d'une ficelle (190) au moins partiellement métallisé(e).

4. Lentille (100) selon l'une quelconque des revendications 1 à 2, dans laquelle les jonctions partiellement métallisées (170, 180) sont des substrats diélectriques métallisés avec une gravure métallique ou une impression à jet d'encre.

5. Lentille (100) selon l'une quelconque des revendications 1 à 2, dans laquelle l'échafaudage (104) est construit en empilant des couches de films minces, de fils métalliques ou de ficelles au moins partiellement métallisés de manière à ce que chaque couche s'entrecroise pour produire la lentille à structure creuse (100).

6. Lentille (100) selon la revendication 5, dans laquelle les couches entrecroisées sont fixées sur un cadre de support (200).

7. Lentille (100) selon la revendication 6, dans laquelle le cadre de support est imprimé en 3D.

8. Lentille (100) selon l'une quelconque des revendications 1, 2, 6 ou 7, dans laquelle l'échafaudage (104) et les jonctions partiellement métallisées sont construits en imbriquant des plaques de film mince au moins partiellement métallisées (210, 220) ; dans laquelle l'imbrication signifie qu'au moins 2 plaques se croisent et forment la jonction (110) ; dans laquelle les plaques au moins partiellement métallisées forment des jonctions au moins partiellement métallisées lorsqu'elles s'imbriquent.

9. Lentille (100) selon l'une quelconque des revendications 1 à 8, dans laquelle le poids de la lentille de Luneburg (100) est inférieur à 20 g, à l'exception de l'ensemble de cadres de support.

10. Lentille (100) selon l'une quelconque des revendications 1 à 9, dans laquelle la plus grande partie de l'espace de lentille est un espace libre en raison de la structure d'échafaudage tridimensionnelle.

11. Procédé de fabrication d'une structure de lentille de Luneburg légère (100) selon la revendication 1, fonctionnant en radiofréquence, RF, en utilisant des approximations de milieu efficace de film mince (180), de fil métallique, de fils, de fibre ou de ficelle (190) diélectriques partiellement métallisés, le procédé comprenant :

    a) la gravure d'une série de motifs, décrivant une permittivité relative variant de manière continue caractéristique de la structure de lentille de Luneburg légère, sur une série de couches d'un substrat diélectrique avec de l'encre conductrice ;
    b) la fourniture d'un cadre de support (200) ;
    c) l'assemblage de la structure de lentille de Luneburg légère en empilant la série de couches du substrat diélectrique ; et

d) la fixation dudit empilement avec l'ensemble de cadres de support (200).

12. Procédé selon la revendication 11 dans lequel le poids de la lentille de Luneburg (100) est inférieur à 20 g, à l'exception de l'ensemble de cadres de support.

13. Procédé de fabrication d'une structure de lentille de Luneburg légère (100) selon la revendication 1, fonctionnant en fréquence RF, en utilisant des approximations de milieu efficace de film mince (180), de fil métallique, de ficelle (190), de fils ou de fibre diélectriques partiellement métallisés pour satisfaire à une exigence d'indice de gradient de structures de lentille de Luneburg, le procédé comprenant :

la construction d'un ensemble de motifs de conception, représentatifs d'une permittivité relative variant de manière continue caractéristique de la structure de lentille de Luneburg légère, avec une pluralité de ficelles partiellement métallisées, dans lequel chaque ficelle partiellement métallisée comprend un revêtement métallique disposé sur un matériau diélectrique.

FIG. 1A

180

170

FIG 1B

FIG 1C　　　200　　　FIG 1D

5 mm

0.5 mm

0.5 mm

190　　　FIG 2A

EP 3 639 067 B1

FIG. 2B

FIG. 2C

FIG. 3A

Layer 12

. . .

Layer 3
Layer 2
Layer 0
Layer -1
Layer -2

. . .

Layer - 12

0    100    200 (mm)

FIG. 3B

FIG. 3C

FIG. 4

Metal Length=4.9 mm
Effective Permittivity =3.18

Metal Length=4.5 mm
Effective Permittivity =1.65

Metal Length=4 mm
Effective Permittivity =1.37

Metal Length=3.5 mm
Effective Permittivity =1.25

Metal Length=2.5 mm
Effective Permittivity =1.11

Metal Length=2 mm
Effective Permittivity =1.08

FIG. 5A

FIG. 5B

Metal Length=4.9 mm
Effective Permittivity =2.2

Metal Length=4.5 mm
Effective Permittivity =1.6

Metal Length=4 mm
Effective Permittivity =1.39

Metal Length=3.5 mm
Effective Permittivity =1.27

Metal Length=2.5 mm
Effective Permittivity =1.13

Metal Length=2 mm
Effective Permittivity =1.09

FIG. 5C

EP 3 639 067 B1

FIG. 6A

FIG. 6B

FIG. 6C

FIG. 7

FIG. 8

FIG. 9

FIG. 10

Approach 1    Approach 2    FIG 11

210    220

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62521098

- US 3254345 A